# EUROPEAN PATENT APPLICATION

(11) **EP 4 617 837 A1**
(43) Date of publication of application: **17.09.2025**
(21) Application number: 23901212.3
(22) Date of filing: 05.12.2023
(51) Int. Cl.: G06F 3/048, H04N 21/80, H04N 21/431, G06T 11/00

(54) **TEXT VIDEO GENERATION METHOD AND APPARATUS, ELECTRONIC DEVICE AND STORAGE MEDIUM**

(30) Priority: 07.12.2022 CN 202211567282
(71) Applicant: Lemon Inc., Grand Cayman, KY1-1205 (KY)
(72) Inventor: ZHENG, Linyi, Beijing 100028 (CN); MA, Xiaotong, Beijing 100028 (CN); XIE, Xinqi, Beijing 100028 (CN); YIN, Ming, Beijing 100028 (CN); LI, Yujie, Beijing 100028 (CN)
(74) Representative: Grünecker Patent- und Rechtsanwälte PartG mbB
(86) International application number: PCT/SG2023/050805
(87) International publication number: WO 2024/123244

(57) **Abstract**

The embodiments of the present disclosure provide method, apparatus, electronic device and storage medium for generating a text video, by displaying a text editing page comprising a text input area; in response to a first input instruction for the text editing page, displaying a target text in the text input area, wherein the target text has a first font state in the text input area, the first font state characterizes a font size and/or a row spacing of the target text, and the first font state is determined by a length of the target text; generating a target video for presenting the target text in the text input area.

## Description

The present application claims the priority of the Chinese invention patent application titled "Method, Apparatus, Electronic Device and Storage Medium for Generating a Text Video" filed on December 7, 2022, with the application number 202211567282.4, the entire content of which being incorporated into the present application by reference.

### FIELD

The embodiments of the present disclosure relate to the technology field of Internet, and in particular to method, apparatus, electronic device and storage medium for generating a text video.

### BACKGROUND

Currently, short video platforms are favored by more and more users by virtue of their rich and diverse content. The client of the short video platform is provided with a contribution entrance which is open to ordinary users, creator users can shoot and upload videos for contribution, and then the server of the short video platform pushes the content uploaded by the creator user to viewing users for consumption.

In the prior art, short video platforms can usually only receive video works made by a user, and cannot edit and generate text videos, leading to that users must manually turn a pure text work into a video before it can be uploaded to the short video platform, reducing the video generation efficiency and quality in the video creation process.

### SUMMARY

The embodiments of the present disclosure provide method, apparatus, electronic device and storage medium for generating a text video to overcome the problem that videos cannot be generated in the form of pure text.

According to a first aspect, the embodiments of the present disclosure provide a method of generating a text video, comprising:
displaying a text editing page comprising a text input area; in response to a first input instruction for the text editing page, displaying a target text in the text input area, wherein the target text has a first font state in the text input area, the first font state characterizes a font size and/or a row spacing of the target text, and the first font state is determined by a length of the target text; generating a target video for presenting the target text in the text input area.

According to a second aspect, the embodiments of the present disclosure provide an apparatus for generating a text video, comprising:
an editing module configured to display a text editing page comprising a text input area;
a displaying module configured to in response to a first input instruction for the text editing page, display a target text in the text input area, wherein the target text has a first font state in the text input area, the first font state characterizes a font size and/or a row spacing of the target text, and the first font state is determined by a length of the target text;
a generating module configured to generate a target video for presenting the target text in the text input area.

According to a third aspect, the embodiments of the present disclosure provide an electronic device, comprising:
a processor, and a memory communicatively connected to the processor;
the memory storing computer-executable instructions;
the processor executing the computer-executable instructions stored in the memory to implement the method of generating a text video according to the first aspect and various possible designs of the first aspect.

According to a fourth aspect, embodiments of the present disclosure provide a computer-readable storage medium having computer-executable instructions stored thereon, the computer-executable instructions, when executed by a processor, implementing the method of generating a text video according to the first aspect and the possible designs of the first aspect.

According to a fifth aspect, embodiments of the present disclosure provide a computer program product, comprising a computer program, the computer program, when executed by a processor, implements the method of generating a text video according to the first aspect and various possible designs of the first aspect.

The method, apparatus, electronic device and storage medium for generating a text video provided in present embodiments achieve the following by displaying a text editing page comprising a text input area; in response to a first input instruction for the text editing page, displaying a target text in the text input area, wherein the target text has a first font state in the text input area, the first font state characterizes a font size and/or a row spacing of the target text, and the first font state is determined by a length of the target text; generating a target video for presenting the target text in the text input area. By setting the text input area and enabling the font size and/or row spacing of the target text edited in the text input area to dynamically change with the text length, and then converting the target text in the text input area, the generated target video can clearly and comprehensively display all the content of the target text, achieving the purpose of generating a text video based on pure text and improving the video generation efficiency and video quality in the video creation process.

### BRIEF DESCRIPTION OF DRAWINGS

In order to more clearly illustrate the technical solutions in the embodiments of the present disclosure or in the prior art, the accompanying drawings used in the description of the embodiments or the prior art will be briefly introduced below, obviously, the drawings described below are some embodiments of the present disclosure, and those skilled in the art may also obtain other drawings according to these drawings without creative efforts.
FIG. 1 is an application scenario diagram of the method of generating a text video provided in the embodiments of the present disclosure;
FIG. 2 is flow chart 1 of the method of generating a text video provided in the embodiments of the present disclosure;
FIG. 3 is a schematic diagram of displaying the target text in the text input area provided in the embodiments of the present disclosure;
FIG. 4 is a flow chart of a specific implementation of step S103 in the embodiment shown in FIG. 2;
FIG. 5 is flow chart 2 of the method of generating a text video provided in the embodiments of the present disclosure;
FIG. 6 is a flow chart of a specific implementation of step S203 in the embodiment shown in FIG. 5;
FIG. 7 is a schematic diagram of the area size of the text input area provided in the embodiments of the present disclosure;
FIG. 8 is a flow chart of a specific implementation of step S2033 in the embodiment shown in FIG. 6;
FIG. 9 is a schematic diagram of the background picture provided in the embodiments of the present disclosure;
FIG. 10 is a flow chart of a specific implementation of step S205 in the embodiment shown in FIG. 5;
FIG. 11 is a structural block diagram of an apparatus for generating a text video provided in the embodiments of the present disclosure;
FIG. 12 is a structural schematic diagram of an electronic device provided in the embodiments of the present disclosure;
FIG. 13 is a schematic diagram of the hardware structure of an electronic device provided in the embodiments of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure, obviously, the described embodiments are part of the embodiments of the present disclosure, rather than all of the embodiments. Based on the embodiments of the present disclosure, all other embodiments obtained by those skilled in the art without creative efforts fall within the protection scope of the present disclosure.

It should be noted that the user information (including but not limited to user equipment information, user personal information, etc. ) and data (including but not limited to data for analysis, stored data, displayed data, etc. ) involved in this application are all information and data that are authorized by users or are sufficiently authorized by the parties, and collection, use and processing of the related data need to comply with relevant laws and regulations and standards of related countries and regions, and provide corresponding operation entrances for users to choose to authorize or refuse.

The following explains the application scenario of the embodiments of the present disclosure:

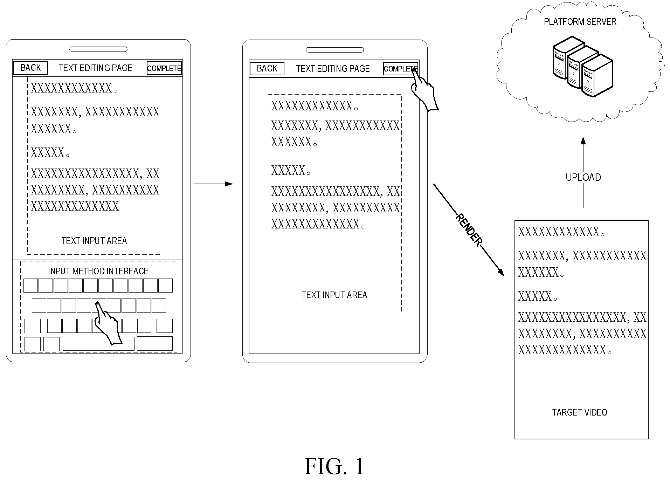

FIG. 1 is an application scenario diagram of the method of generating a text video provided in embodiments of the present disclosure, and the method of generating a text video provided in the embodiments of the present disclosure can be applied to application scenarios of video editing and uploading on the client side of a short video platform. Specifically, as shown in FIG. 1, the method provided in the embodiments of the present disclosure may be applied to a terminal device, for example, a smart phone. The client of the short video platform runs in the terminal device, a text editing page is set in the client, the terminal device triggers the corresponding components to enter the text editing page in response to user operations, a text input area is set in the file editing page, and users edit characters in the text input area through an input method. Specifically, as shown in the figure, for example, after the user clicks on the text input area, the text input area enters the editing state and displays the text input cursor, and the input method interface pops up in the text editing page, and the user inputs text in the text input area by operating the input method interface to generate the target text ("X" in the figure represents the character). After the target text input is completed, the input method interface is hidden, and the complete text input area is displayed in the text editing page. Then, the "Complete" button is clicked, the target text in the text input area is rendered, the video material is generated, and the video material is uploaded to the server of the short video platform (shown as the platform server in the figure), thereby completing the process of generating the video work from the pure text work and uploading the video work to the short video platform. On the other hand, clicking the "Back" button may exit the text editing page, which will not be repeated here.

In the prior art, a client side of a short video platform usually can only receive a video work made by a user, and after necessary steps such as transcoding, compression and the like, upload the video work to a video pool of a server, and then the server pushes videos to different users based on the video in the video pool. However, for videos corresponding to the pure text content, the client of the short video platform usually does not provide a function page for editing and creation, since the text length is determined by the text content edited by the users during the editing process of the pure text, therefore, when the text is displayed with a fixed font size and row spacing, the problem that the font and the row spacing are too small or too large will occur, for example, taking the font as an example, when the target text edited by the user contains 5 Chinese characters, a fixed size three font (for example) is used for display, and the font size is appropriates; when the target text edited by the user contains 500 Chinese characters, the fixed size three font character is still used for display, so that the font is too large, and all the content in the target text cannot be displayed on the same screen, and the text video is a video that statically displays the text (that is, the video always displays the same frame of content), resulting in the problem of content loss of the text video generated by rendering based on the target text; conversely, in the above example situation, if a size five font (for example) is used for display, when the target text edited by the user comprises 5 Chinese characters, the problem of too small a font may occur, and then the font in the text video generated by rendering based on the target text is too small, which affects the video display effect. Due to the inability to automatically adapt the size of fonts and row spacings, the generated text video cannot display normal text content, and it is difficult to achieve the video display purpose of text videos. Therefore, in the prior art, various short video platforms can usually only receive text videos made by users, and cannot automatically generate text videos with good display effects.

The embodiments of the present disclosure provide a method of generating a text video to solve the above problems.

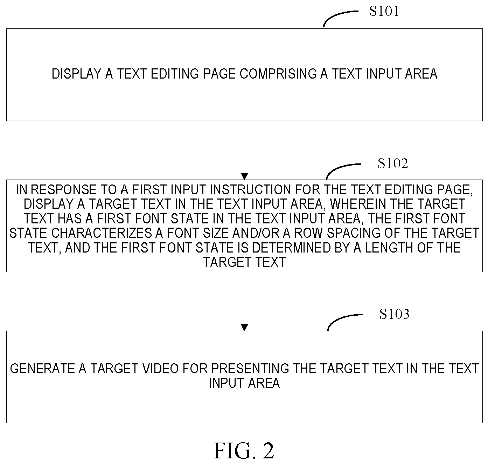

Referring to FIG. 2, FIG. 2 is a flow chart 1 of the method of generating a text video provided in the embodiments of the present disclosure. The method of the embodiments may be applied in a terminal device, the method of generating a text video includes:
Step S101: displaying a text editing page comprising a text input area.

For example, referring to the application scenario diagram shown in FIG. 1, in the client of the short video platform (hereinafter referred to as the client), the text editing page may be started by responding to a trigger operation, and the specific style may be seen in FIG. 1, specifically, the function component for triggering the text editing page may be set on the video playing page of the client (that is, the default page of the short video application); it may also be set on the video shooting page used for uploading video works, that is, the viewfinder page. After that, after receiving the user's trigger operation on this function component, the text editing page is displayed.

Furthermore, a text input area is set in the text editing page. For example, after the terminal device receives the user's click operation on the text input area, the text input area is activated and obtains the input focus. After that, the user may input character information such as words and symbols in this text input area through an input method. The position and size of the text input area are set according to specific needs and are not limited here.

Step S102: in response to a first input instruction for the text editing page, displaying a target text in the text input area, wherein the target text has a first font state in the text input area, the first font state characterizes a font size and/or a row spacing of the target text, and the first font state is determined by a length of the target text.

For example, after the text input area obtains the input focus, the terminal device receives the first input instruction input by the user. The first input instruction is used to generate character information of the target text, the first input instruction may include identifiers corresponding to specific characters and symbols, or identifiers of spelling elements used to form characters, such as Chinese pinyin, letters, etc., which will not be enumerated one by one here. After obtaining the first input instruction, the terminal device converts the first input instruction into corresponding characters and symbols through the input method in the system and displays them in the above text input area to form the target text. The target text is the text to be finally released.

The target text may include one or more characters and symbols. It should be noted that the symbols input and displayed in the text input area include visible symbols and invisible symbols. Visible symbols include commas, periods and other symbols used for text editing, and so on. Invisible symbols include spaces, empty rows and row breaks, etc. The target text composed of characters and symbols has a paragraph structure, for example, the target text is divided into several paragraphs, and the target text contains empty rows, etc., so that the target text in the text input area has better readability visually.

Furthermore, the target text displayed in the text input area has a first font state, wherein the first font state characterizes the font size and/or row spacing of the target text, and the first font state is determined by the length of the target text. Specifically, when the length of the target text is larger, the font size of the characters and symbols in the target text is smaller, and/or the row spacing between rows in the target text is smaller; conversely, when the length of the target text is smaller, the font size of the characters and symbols in the target text is larger, and/or the row spacing between rows in the target text is larger. In short, when the length of the target text is relatively large, the terminal device compresses the target text in the text input area, so that the text input area may carry more characters and symbols; and when the length of the target text is relatively small, the font is enlarged, so that the content of the target text is more prominent and the visual display effect is better. Of course, it can be understood that there is a certain allowable range for adjusting the first font state (that is, the font size and/or row spacing of the target text). There is a predetermined nonlinear mapping relationship between the first font state and the length of the target text. The specific implementation method will be introduced in subsequent embodiments and will not be described in detail here.

Furthermore, based on the introduction of the implementation method of the target text above, the length of the target text may be determined by the number of characters in the target text, or it may be determined by the sum of the number of characters and symbols in the target text, it may also be determined according to the overall occupied length of the target text in the text input area. For example, when the target text includes an empty row character, one empty row character occupies one empty row in the text input area. Therefore, when the target text contains empty rows, using the overall occupied length of the target text in the text input area to determine the length of the target text may more accurately measure the actual length of the target text, thereby improving the display effect of the finally generated target video.

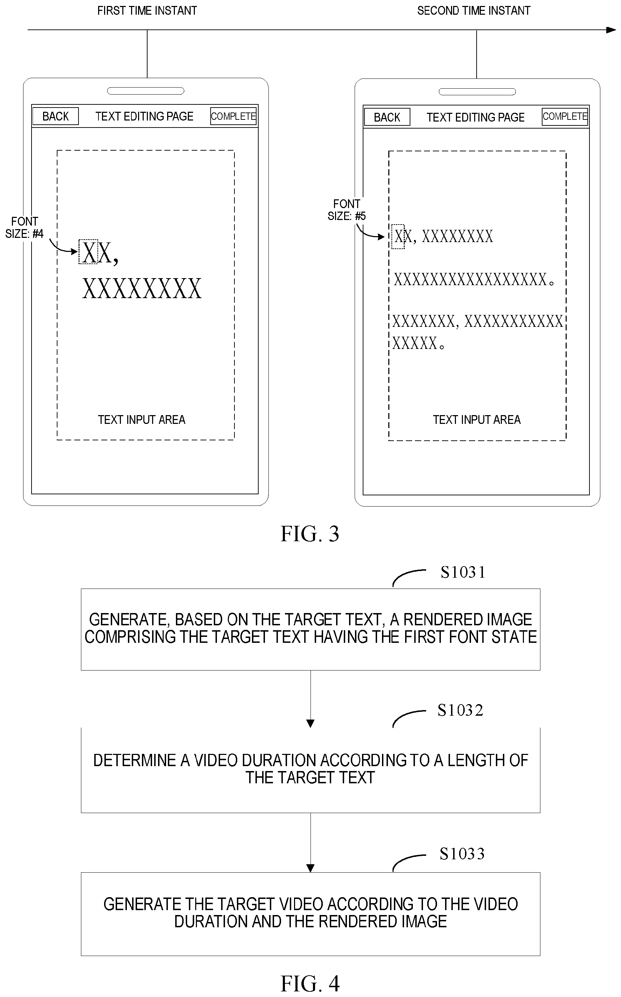

FIG. 3 is a schematic diagram of displaying the target text in the text input area provided in the embodiments of the present disclosure. As shown in FIG. 3, in this embodiment, the total number of characters in the target text is taken as the length of the target text. Based on the first input instruction, the terminal device continuously displays the corresponding target text in the text input area. When the length N of the target text is equal to 10 (at the first moment), the first font state of the target text is Info_1, characterizing that the font size of each character and symbol in the target text is #4. As the first input instruction is continuously input, the length of the target text continues to increase. When the length N of the target text is equal to 50 (at the second moment), the first font state of the target text is Info_2, characterizing that the font size of each character and symbol in the target text is #5 (one level smaller than #4). Thus, the purpose of dynamically displaying the font size of the target text in the text input area is achieved.

Furthermore, on the basis of the above embodiments, the first font state also includes information characterizing the row spacing. Through the first font state, the row spacing of the target text may be further adjusted. For example, when the length N of the target text is equal to 10, the first font state of the target text is Info_1, characterizing that the font size of each character and symbol in the target text is #4 and the row spacing is 1. When the length N of the target text is equal to 50, the first font state of the target text is Info_2, characterizing that the font size of each character and symbol in the target text is #5 and the row spacing is 0.8.

Or, in another possible implementation, the row spacing of the target text may also be determined separately based on the length of the target text. For example, referring to FIG. 3, when the length N of the target text is equal to 10, the first font state of the target text is Info_1, characterizing that the row spacing of the target text is 1. When the length N of the target text is equal 50, the first font state of the target text is Info_2, characterizing that the row spacing of the target text is 0.8.

Step S103: generating a target video for presenting the target text in the text input area.

For example, the target text in the text input area has a corresponding first font state. After that, the text input area is rendered to generate a video with a predetermined duration, that is, the target video. Among them, the target video is equivalent to the restored display of the target text in the text input area. Therefore, the target video may not only display the text content of the target text, but also restore the first font state of the target text, that is, the size of the characters in the target text and/or the row spacing, so that the target text displayed in the target video is visually consistent with the target text displayed in the text input area. Furthermore, when the user edits the text content in the text input area, they may have an accurate expectation of the display effect of the finally generated target video (that is, the text video), thereby improving the video quality of the finally generated target video. Avoid problems such as the text in the generated text video being too small to read; or the text in the text video being too large to be fully displayed.

In a possible implementation, as shown in FIG. 4, the specific implementation of step S103 includes:
Step S1031: generating, based on the target text, a rendered image comprising the target text having the first font state.

Step S1032: determining a video duration according to a length of the target text.

Step S1033: generating the target video according to the video duration and the rendered image.

For example, first, after the input of the target text in the text input area is completed, based on the target text in the text input area, the target text with the first font state in the text input area is converted into an image, that is, a rendered image. There are many specific implementations for converting text into images. For example, a rendered image is generated by taking a screenshot of the text input area; or, taking the target text and the corresponding first font state as input parameters and inputting them into an image converter to generate a corresponding rendered image. The specific implementation steps of converting characters into pictures are prior arts known to those skilled in the art and will not be repeated here.

Furthermore, determine the corresponding video duration according to the length of the target text, for example, the number of characters in the target text. Since the finally generated target video needs to match the user's reading time when displaying the target text, when the length of the target text is longer, the time required for the user to read the target text in the target video is longer. Therefore, setting a video duration that matches the length of the target text may improve the display effect of the target video. After that, taking the rendered image as the material and the video duration as the parameter, perform video conversion to generate a static video, that is, the target video.

In this embodiment, by displaying a text editing page which includes a text input area; in response to a first input instruction for the text editing page, displaying a target text in the text input area, wherein the target text has a first font state within the text input area, the first font state characterizes the font size and/or row spacing of the target text, the first font state is determined by the length of the target text; generating a target video for displaying the target text in the text input area. By setting a text input area and enabling the font size and/or row spacing of the target text edited in the text input area to dynamically change with the text length, and then converting the target text in the text input area, the generated target video may clearly and comprehensively display all the content of the target text, achieving the purpose of generating a text video based on pure text, improving the video generation efficiency in the video creation process, and increasing the diversity of video content in the video platform.

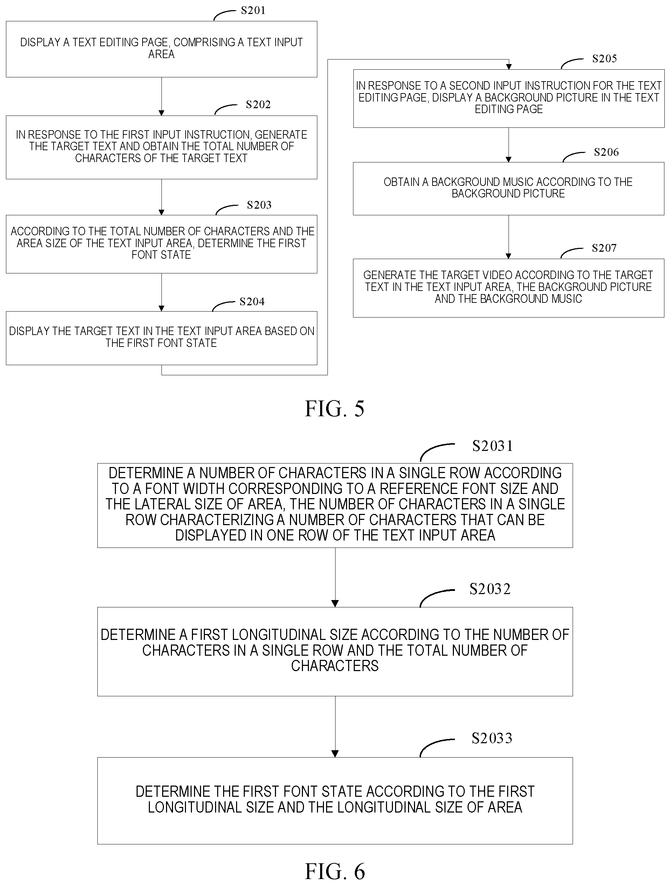

FIG. 5 is a flow chart 2 of the method of generating a text video provided in the embodiments of the present disclosure. This embodiment further refines step S102 on the basis of the embodiments shown in FIG. 2 and adds steps to configure background pictures and background music for the target video. The method of generating a text video includes:
Step S201: displaying a text editing page, comprising a text input area.

Step S202: in response to the first input instruction, generating the target text and obtain the total number of characters of the target text.

Step S203: according to the total number of characters and the area size of the text input area, determining the first font state.

For example, after displaying the editing page and responding to the first input instruction for the editing page, according to the information in the first input instruction, corresponding characters and symbols may be generated, and then the target text is generated. The specific implementation steps have been introduced in detail in the embodiments shown in FIG. 2 and will not be repeated here. After that, by calling a statistical function to process the string corresponding to the target text, the total number of characters of the target text may be obtained. In this embodiment, the total number of characters may be the number of only characters in the target text, or the sum of the number of characters and the number of symbols.

For example, the text input area of the text editing page has an area size. Taking the text input area as a rectangle as an example, the area size of the text input area may be the length and width of the text input area. Furthermore, the area size of the text input area may represent the area of the text input area. The larger the area of the text input area, the greater the total number of characters that may be displayed. The area size of the text input area is a predetermined fixed value and may be determined according to the screen pixel size of the terminal device, which will not be repeated here.

Further, after determining the total number of characters and the area size of the text input area, first calculate the total area of the text input area based on the area size of the text input area. After that, by using the ratio of the total area to the total number of characters, the unit area occupied by the font size (and symbols) may be obtained. Then, according to the unit area and the predetermined correction coefficient, the font size and/or the corresponding row spacing, that is, the first font state, may be determined. The above implementation does not take into account the influence of blank areas caused by row breaks and empty rows, so it is suitable for rough calculation of the first font state.

In another possible implementation, the area size includes a lateral size of area and a longitudinal size of area. As shown in FIG. 6, the specific implementation of step S203 includes:
Step S2031: determining a number of characters in a single row according to a font width corresponding to a reference font size and the lateral size of area, the number of characters in a single row characterizing a number of characters that can be displayed in one row of the text input area.

Step S2032: determining a first longitudinal size according to the number of characters in a single row and the total number of characters.

Step S2033: determining the first font state according to the first longitudinal size and the longitudinal size of area.

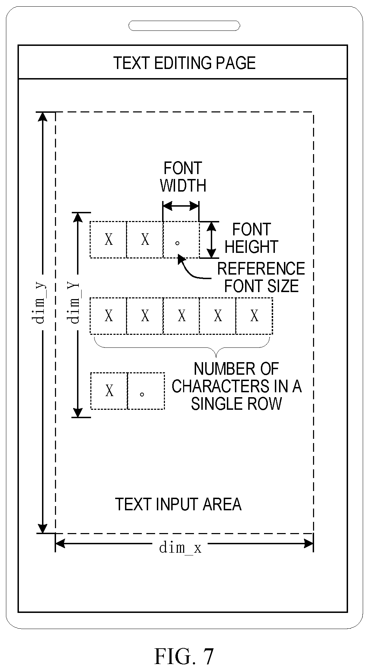

FIG. 7 is a schematic diagram of the area size of the text input area provided in the embodiments of the present disclosure. As shown in FIG. 7, in the text editing page of the client, the text input area is a longitudinally arranged rectangular area (adapted to the display screen of a smartphone). The lateral size of area is shown as dim_x and the longitudinal size of area is shown as dim_y. The user inputs target text in this text input area. The reference font size is a predetermined font size for input characters and has a corresponding font width and font height. For example, when the font is a Chinese font, the font width and font height of the characters can be the same. According to the ratio value of the lateral size of area and the font width corresponding to the reference font size, the number of characters per row can be determined, that is, the number of characters that can be displayed in one row of the text input area. For example, it is 20 characters. After that, by dividing the total number of characters of the target text by the number of characters per row, the total number of rows may be obtained. Then, based on the font height and the reference row spacing, the average row height is obtained. By calculating the product of the average row height and the total number of rows, the first longitudinal size can be obtained, which is shown as dim_Y in the figure. Among them, the reference row spacing, similar to the reference font size, may also be a predetermined value, and examples will not be repeated here.

Further, after determining the first longitudinal size, compare the first longitudinal size with the longitudinal size of area. If the first longitudinal size is greater than the longitudinal size of area, it means that at this time, the font size and/or row spacing is too large, resulting in exceeding the text input area, and then the subsequently generated target video cannot display all the content of the target text in a static display manner. In this case, reduce the reference font size and/or reference row spacing that affects the first longitudinal size to obtain the first font state. Specifically, for example, a ratio coefficient less than 1 can be multiplied on the basis of the reference font size and/or reference row spacing to obtain the first font state. In another case, if the first longitudinal size is less than the longitudinal size of area, it means that at this time, the font size and/or row spacing is too small, resulting in the target text not being properly laid out in the text input area, and then affecting the display effect of the subsequently generated target video. In this case, enlarge the reference font size and/or reference row spacing that affects the first longitudinal size to obtain the first font state. Specifically, for example, a ratio coefficient greater than 1 may be multiplied on the basis of the reference font size and/or reference row spacing to obtain the first font state.

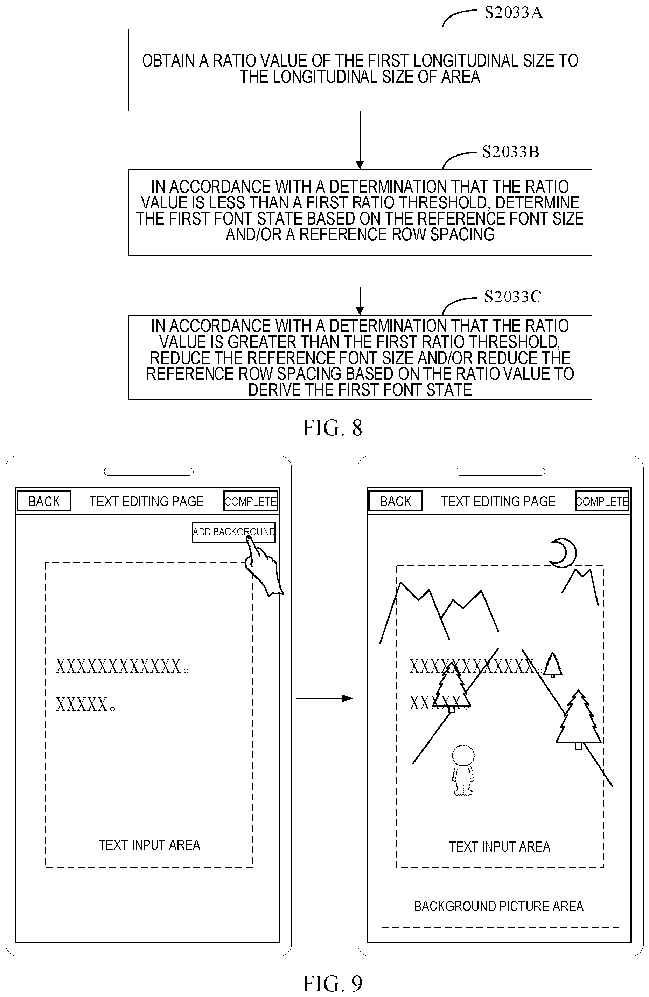

Furthermore, for example, the ratio coefficient for adjusting the reference font size and/or reference row spacing may be determined through the proportional relationship between the first longitudinal size and the longitudinal size of area. As shown in FIG. 8, for example. The specific implementation of step S2033 includes:
Step S2033A: obtaining a ratio value of the first longitudinal size to the longitudinal size of area.

Step S2033B: in accordance with a determination that the ratio value is less than a first ratio threshold, determining the first font state based on the reference font size and/or a reference row spacing.

Step S2033C: in accordance with a determination that the ratio value is greater than the first ratio threshold, reducing the reference font size and/or reducing the reference row spacing based on the ratio value to derive the first font state.

For example, after determining the first longitudinal size and the longitudinal size of area, calculate the ratio value of the first longitudinal size to the longitudinal size of area. For example, if the first longitudinal size sis 8 (predetermined unit) and the longitudinal size of area is 10, the ratio value of the first longitudinal size and the longitudinal size of area is 0.8. The first ratio threshold characterizes the proportion of the text input area, that is, the screen proportion after generating the target video. When the first ratio threshold is 1, it characterizes the entire area of the text input area. When the first ratio threshold is 0.8, it characterizes 80% of the area of the text input area (ideal display area). Further, in one possible situation, when the ratio value is less than the first ratio threshold, it means that the target text does not exceed the text input area and will not cause the problem that the generated target video cannot display all the target text. At the same time, since the reference font size and/or reference row spacing may be considered as ideal parameters set based on specific needs, the reference font size and/or reference row spacing may be used as the first font state.

In another possible situation, when the ratio value is greater than the first ratio threshold, it means that the target text has exceeded the text input area or the ideal display area of the text input area, which will cause the problem that the generated target video cannot display all the target text. At this time, adjust the reference font size or reference row spacing based on the ratio value. The first ratio threshold is, for example, 1. Specifically, for example, when the ratio value is greater than or equal to 0.8 and less than 1, reduce one font size. When the ratio value is greater than or equal to 0.6 and less than 0.8, reduce two font sizes, and so on. Thus, the target font size and/or target row spacing obtained after reducing the reference font size and/or reference row spacing is determined as the first font state.

Step S204: displaying the target text in the text input area based on the first font state.

In this step of this embodiment, by calculating the ratio value of the first longitudinal size and the longitudinal size of area, and based on the ratio value, reducing it on the basis of the reference font size and reference row spacing, the matched first font state is dynamically determined. Thus, the length of the target text in the text input area is more accurately controlled, the content length of the finally generated target video is increased, and the display effect of the text video and the user's reading experience are improved.

Step S205: in response to a second input instruction for the text editing page, displaying a background picture in the text editing page.

For example, on the basis of the above steps, a component for configuring background pictures is also set in the text editing page. After the user triggers this component through an operation instruction, a background picture may be displayed in the text editing page. Specifically, the display area corresponding to the background picture is the background picture area. This background picture area covers the text input area. FIG. 9 is a schematic diagram of a background picture provided in the embodiments of the present disclosure. As shown in FIG. 9, after the terminal device receives the user's click operation on the "Add background" control, it generates and executes a second input instruction, and automatically adds a background picture to the background picture area in the file editing page. Among them, based on the background picture area covering the text input area and the text input area being located at the center of the background picture. In the subsequent steps, the background picture area is rendered as the target area to generate the corresponding target video. Thus, the target text in the generated target video is displayed on the background picture, improving the display effect of the target text in the target video.

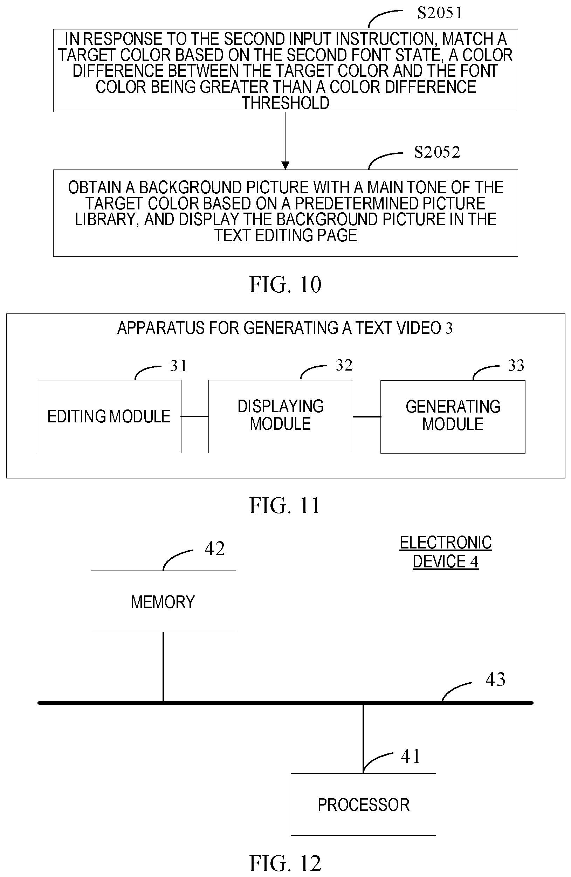

Furthermore, for example, the target text also has a second font state. The second font state characterizes the font color of the target text. As shown in FIG. 10, the specific implementation of step S205 includes:
Step S2051: in response to the second input instruction, matching a target color based on the second font state, a color difference between the target color and the font color being greater than a color difference threshold.

Step S2052: obtaining a background picture with a main tone of the target color based on a predetermined picture library and displaying the background picture in the text editing page.

For example, after receiving the second input instruction, first obtain the second font state of the target text, that is, the font color of the target text. This second font state may be set based on the operation instruction input by the user. The specific implementation is the prior art and will not be repeated here. After that, according to the font color characterized by the second font state, determine another color with a color difference greater than the color difference threshold from it, that is, the target color. In short, determine a color with a high degree of difference from the font color of the target text as the target color. For example, if the font color of the target text is black, the target color may be white, light green, light blue, etc. (the color difference from black is greater than the threshold). After that, obtain a background picture with the main tone of the target color from the predetermined picture library, so that the background picture and the font color of the target text have a high contrast, avoiding the problem that the target text is difficult to recognize due to the similarity between the background picture and the color of the target text, and improving the display clarity of the target text in the target video.

Step S206: obtaining a background music according to the background picture.

Further, after obtaining the background picture, on the basis of the background picture, automatically select background music that matches the background picture. For example, when the content of the background picture is "landscape scenery", then according to the semantic information of the background picture, obtain a song label of a slow-paced music type that matches it. When the content of the background picture is "a crowd dancing in the dance floor", then according to the semantic information of the background picture, obtain a song label of a dynamic-paced music type that matches it. After that, select the corresponding target music from the music library as the background music based on the song label. Among them, the specific implementation of obtaining the semantic information of the background picture and obtaining the corresponding song label based on the semantic information may be implemented by a pre-trained image semantic model and will not be repeated here.

In steps of this embodiment, by obtaining matching background music through the background picture, the background picture and the background music have semantic consistency, so that the finally generated target video may have better video expressiveness and improve the quality of the text video.

Step S207: generating the target video according to the target text in the text input area, the background picture and the background music.

After obtaining the target text, background picture and background music, render based on the target text and background picture to obtain the corresponding rendered image. The above process has been introduced in the embodiments shown in FIG. 2 and will not be repeated here. After that, merge and convert the rendered image and the background music to obtain the target video. For example, the video duration of the target video in this embodiment may be determined based on the music duration of the background music. The specific implementation steps have been introduced in the embodiments shown in FIG. 2 and will not be repeated here.

Of course, it can be understood that in other possible embodiments, after obtaining the target text and the corresponding first font state, only a background picture or background music matching the target text may be obtained, and then generate the target video based on the target text and the background picture or generate the target video based on the target text and the background music. Among them, the background music may be determined based on the semantic information of the target text. The specific implementation process is similar to the implementation process in the above embodiment steps and will not be repeated here.

Corresponding to the method of generating a text video in the foregoing embodiments, FIG. 11 is a structural block diagram of an apparatus for generating a text video provided in embodiments of the present disclosure. For ease of illustration, only portions related to embodiments of the present disclosure are shown. Referring to FIG. 11, the apparatus 3 for generating a text video includes:
an editing module 31 configured to display a text editing page comprising a text input area;
a displaying module 32 configured to in response to a first input instruction for the text editing page, display a target text in the text input area, wherein the target text has a first font state in the text input area, the first font state characterizes a font size and/or a row spacing of the target text, and the first font state is determined by a length of the target text;
a generating module 33 configured to generate a target video for presenting the target text in the text input area.

In an embodiment of the present disclosure, the displaying module 32 is specifically configured to: in response to the first input instruction, generate the target text and obtaining a total number of characters of the target text; determine the first font state according to the total number of characters and an area size of the text input area; display the target text in the text input area based on the first font state.

In an embodiment of the present disclosure, the area size comprises a lateral size of area and a longitudinal size of area; when determining the first font state according to the total number of characters and an area size of the text input area, the displaying module 32 is specifically configured to: determine a number of characters in a single row according to a font width corresponding to a reference font size and the lateral size of area, the number of characters in a single row characterizing a number of characters that can be displayed in one row of the text input area; determine a first longitudinal size according to the number of characters in a single row and the total number of characters; determine the first font state according to the first longitudinal size and the longitudinal size of area.

In an embodiment of the present disclosure, when determining the first font state according to the first longitudinal size and the longitudinal size of area, the displaying module 32 is specifically configured to: obtain a ratio value of the first longitudinal size to the longitudinal size of area; in accordance with a determination that the ratio value is less than a first ratio threshold, determine the first font state based on the reference font size and/or a reference row spacing; in accordance with a determination that the ratio value is greater than the first ratio threshold, reduce the reference font size and/or reducing the reference row spacing based on the ratio value to derive the first font state.

In an embodiment of the present disclosure, the generating module 33 is specifically configured to: generate, based on the target text, a rendered image comprising the target text having the first font state; determine a video duration according to a length of the target text; generating the target video according to the video duration and the rendered image.

In an embodiment of the present disclosure, before generating a target video for presenting the target text in the text input area, the displaying module 32 is further configured to: in response to a second input instruction for the text editing page, display a background picture in the text editing page; and the generating module 33 is specifically configured to generate the target video according to the target text in the text input area and the background picture.

In an embodiment of the present disclosure, the target text further has a second font state characterizing a font color of the target text; when in response to a second input instruction for a text editing page, displaying a background picture in the text editing page, the displaying module 32 is specifically configured to: in response to the second input instruction, match a target color based on the second font state, a color difference between the target color and the font color being greater than a color difference threshold; obtain a background picture with a main tone of the target color based on a predetermined picture library, and display the background picture in the text editing page.

In an embodiment of the present disclosure, the generating module 33 is further configured to: obtain a background music according to the background picture; generate a target video for presenting the target text in the text input area comprising: generate the target video according to the target text in the text input area and the background music.

The editing module 31, the displaying module 32 and the generating module 33 are connected in sequence. The apparatus 3 for generating a text video provided in this embodiment may perform the technical solutions of the foregoing method embodiments, and implementation principles and technical effects thereof are similar, and details are not described herein again in this embodiment.

FIG. 12 is a structural schematic diagram of an electronic device provided by embodiments of the present disclosure. As shown in FIG. 12, the electronic device 4 includes:
a processor 41 and a memory 42 in communication connection with the processor 41;
the memory 42 stores computer execution instructions;
the processor 41 executes the computer execution instructions stored in the memory 42 to implement the text video generation method in the embodiments shown in Figures 2-10.

Among them, optionally, the processor 41 and the memory 42 are connected by a bus 43.

The relevant descriptions can be understood by referring to the relevant descriptions and effects corresponding to the steps in the embodiments corresponding to Figures 2-10 and will not be repeated here.

The embodiments of the present disclosure provide a computer-readable storage medium. Computer execution instructions are stored in the computer-readable storage medium. When the computer execution instructions are executed by a processor, they are used to implement the text video generation provided in any of the embodiments corresponding to Figures 2-10 of the present application.

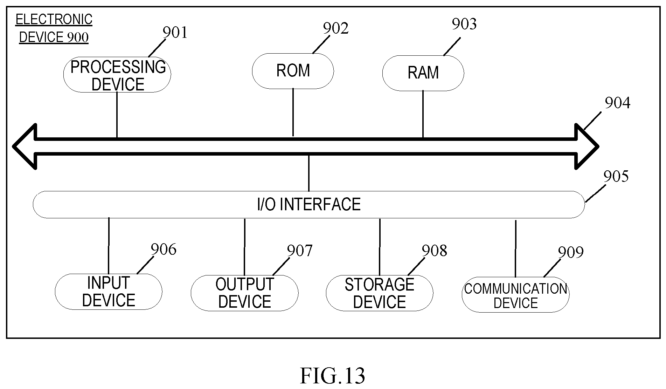

Referring to FIG. 13, it shows a schematic structural diagram of an electronic device 900 suitable for implementing the embodiments of the present disclosure. The electronic device 900 can be a terminal device or a server. Among them, terminal devices can include but are not limited to mobile terminals such as mobile phones, laptops, digital broadcast receivers, personal digital assistants (referred to as PDA), tablet computers (referred to as PAD), portable multimedia players (referred to as PMP), vehicle-mounted terminals (such as vehicle-mounted navigation terminals), etc., and fixed terminals such as digital TVs and desktop computers. The electronic device 900 shown in FIG. 13 is only an example and should not bring any limitations to the functions and application scope of the embodiments of the present disclosure.

As shown in FIG. 13, the electronic device 900 can include a processing device (such as a central processing unit, a graphics processing unit, etc.) 901, which can perform various appropriate actions and processing according to a program stored in a read-only memory (referred to as ROM) 902 or a program loaded from a storage device 908 into a random access memory (referred to as RAM) 903. In the RAM 903, various programs and data required for the operation of the electronic device 900 are also stored. The processing device 901, ROM 902 and RAM 903 are connected to each other through a bus 904. The input/output (I/O) page 905 is also connected to the bus 904.

Usually, the following devices can be connected to the I/O page 905: input devices 906 including, for example, a touch screen, a touch pad, a keyboard, a mouse, a camera, a microphone, an accelerometer, a gyroscope, etc.; output devices 907 including, for example, a liquid crystal display (referred to as LCD), a speaker, a vibrator, etc.; storage devices 908 including, for example, magnetic tapes, hard disks, etc.; and communication devices 909. The communication device 909 can allow the electronic device 900 to perform wireless or wired communication with other devices to exchange data. Although the electronic device 900 with various devices is shown in FIG. 13, it should be understood that not all the shown devices are required to be implemented or possessed. More or fewer devices can be implemented or possessed instead.

In particular, according to the embodiments of the present disclosure, the process described above with reference to the flow chart can be implemented as a computer software program. For example, an embodiment of the present disclosure includes a computer program product, which includes a computer program carried on a computer-readable medium. The computer program contains program codes for executing the method shown in the flow chart. In such an embodiment, the computer program can be downloaded and installed from the network through the communication device 909, or installed from the storage device 908, or installed from the ROM 902. When the computer program is executed by the processing device 901, the above-mentioned functions defined in the method of the embodiments of the present disclosure are executed.

It should be noted that the computer-readable medium mentioned above in the present disclosure can be a computer-readable signal medium or a computer-readable storage medium or any combination of the two. Computer-readable storage media, for example, can be-but are not limited to-electric, magnetic, optical, electromagnetic, infrared, or semiconductor systems, apparatuses, or devices, or any combination of the above. More specific examples of computer-readable storage media can include, but are not limited to: electrical connections with one or more wires, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the above. In the present disclosure, a computer-readable storage medium can be any tangible medium that contains or stores a program that can be used by an instruction execution system, apparatus, or device or used in combination with it. In the present disclosure, a computer-readable signal medium can include a data signal propagated in a baseband or as part of a carrier wave, in which computer-readable program codes are carried. This propagated data signal can take many forms, including but not limited to electromagnetic signals, optical signals, or any suitable combination of the above. The computer-readable signal medium can also be any computer-readable medium other than the computer-readable storage medium. The computer-readable signal medium can send, propagate, or transmit a program for use by or in combination with an instruction execution system, apparatus, or device. The program code contained on the computer-readable medium can be transmitted by any appropriate medium, including but not limited to wires, optical cables, RF (radio frequency), etc., or any suitable combination of the above.

The above computer-readable medium can be included in the above electronic device; it can also exist independently and not be assembled into the electronic device.

The above computer-readable medium carries one or more programs. When the one or more programs are executed by the electronic device, the electronic device is made to execute the method shown in the above embodiments.

Computer program codes for performing the operations of the present disclosure can be written in one or more programming languages or a combination thereof. The programming languages include object-oriented programming languages-such as Java, Smalltalk, C++, and also include conventional procedural programming languages-such as "C" language or similar programming languages. The program code can be executed completely on the user's computer, partly on the user's computer, as an independent software package, partly on the user's computer and partly on a remote computer, or completely on the remote computer or server. In the case of a remote computer, the remote computer can be connected to the user's computer through any kind of network-including a local area network (referred to as LAN) or a wide area network (referred to as WAN)-or can be connected to an external computer (for example, connected through the Internet using an Internet service provider).

The flowcharts and block diagrams in the accompanying drawings illustrate the possible implementation architecture, functions and operations of the systems, methods and computer program products according to various embodiments of the present disclosure. At this point, each block in the flowchart or block diagram can represent a module, program segment, or part of code. The module, program segment, or part of code contains one or more executable instructions for implementing the specified logical function. It should also be noted that, in some alternative implementations, the functions marked in the block may also occur in a sequence different from the sequence marked in the drawings. For example, two blocks shown in succession can actually be executed basically in parallel, and they may sometimes also be executed in the reverse order, depending on the functions involved. It should also be noted that each block in the block diagram and/or flowchart, and combinations of blocks in the block diagram and/or flowchart, can be implemented by a dedicated hardware-based system for performing the specified functions or operations, or can be implemented by a combination of dedicated hardware and computer instructions.

The units involved in the description in the embodiments of the present disclosure can be implemented by software or by hardware. Among them, the name of the unit does not constitute a limitation on the unit itself under certain circumstances. For example, the first acquisition unit can also be described as "a unit for acquiring at least two Internet protocol addresses".

The functions described above in this article can be performed at least partially by one or more hardware logic components. For example, without limitation, illustrative types of hardware logic components that can be used include Field Programmable Gate Array (FPGA), Application Specific Integrated Circuit (ASIC), Application Specific Standard Product (ASSP), System on Chip (SOC), Complex Programmable Logic Device (CPLD), and so on.

In the context of the present disclosure, a machine-readable medium can be a tangible medium that can contain or store a program for use by or in combination with an instruction execution system, apparatus, or device. A machine-readable medium can be a machine-readable signal medium or a machine-readable storage medium. A machine-readable medium can include, but is not limited to, electronic, magnetic, optical, electromagnetic, infrared, or semiconductor systems, apparatuses, or devices, or any suitable combination of the above. More specific examples of machine-readable storage media would include electrical connections based on one or more wires, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the above.

According to a first aspect, a method of generating a text video is provided according to one or more embodiments of the present disclosure, including:
displaying a text editing page comprising a text input area; in response to a first input instruction for the text editing page, displaying a target text in the text input area, wherein the target text has a first font state in the text input area, the first font state characterizes a font size and/or a row spacing of the target text, and the first font state is determined by a length of the target text; generating a target video for presenting the target text in the text input area.

According to one or more embodiments of the present disclosure, in response to a first input instruction for the text editing page, displaying a target text in the text input area includes: in response to the first input instruction, generating the target text and obtaining a total number of characters of the target text; determining the first font state according to the total number of characters and an area size of the text input area; displaying the target text in the text input area based on the first font state.

According to one or more embodiments of the present disclosure, the area size comprises a lateral size of area and a longitudinal size of area; and determining the first font state according to the total number of characters and an area size of the text input area comprises: determining a number of characters in a single row according to a font width corresponding to a reference font size and the lateral size of area, the number of characters in a single row characterizing a number of characters that can be displayed in one row of the text input area; determining a first longitudinal size according to the number of characters in a single row and the total number of characters; determining the first font state according to the first longitudinal size and the longitudinal size of area.

According to one or more embodiments of the present disclosure, determining the first font state according to the first longitudinal size and the longitudinal size of area comprises: obtaining a ratio value of the first longitudinal size to the longitudinal size of area; in accordance with a determination that the ratio value is less than a first ratio threshold, determining the first font state based on the reference font size and/or a reference row spacing; in accordance with a determination that the ratio value is greater than the first ratio threshold, reducing the reference font size and/or reducing the reference row spacing based on the ratio value to derive the first font state.

According to one or more embodiments of the present disclosure, generating a target video for presenting the target text in the text input area comprises: generating, based on the target text, a rendered image comprising the target text having the first font state; determining a video duration according to a length of the target text; generating the target video according to the video duration and the rendered image.

According to one or more embodiments of the present disclosure, before generating a target video for presenting the target text in the text input area, the method further comprises: in response to a second input instruction for the text editing page, displaying a background picture in the text editing page; generating a target video for presenting the target text in the text input area comprising: generating the target video according to the target text in the text input area and the background picture.

According to one or more embodiments of the present disclosure, the target text further has a second font state characterizing a font color of the target text; in response to a second input instruction for a text editing page, displaying a background picture in the text editing page comprising: in response to the second input instruction, matching a target color based on the second font state, a color difference between the target color and the font color being greater than a color difference threshold; obtaining a background picture with a main tone of the target color based on a predetermined picture library, and displaying the background picture in the text editing page.

According to one or more embodiments of the present disclosure, the method further comprises: obtaining a background music according to the background picture; generating a target video for presenting the target text in the text input area comprising: generating the target video according to the target text in the text input area and the background music.

According to a second aspect, an apparatus for generating a text video is provided according to one or more embodiments of the present disclosure, including:
an editing module configured to display a text editing page comprising a text input area;
a displaying module configured to in response to a first input instruction for the text editing page, display a target text in the text input area, wherein the target text has a first font state in the text input area, the first font state characterizes a font size and/or a row spacing of the target text, and the first font state is determined by a length of the target text;
a generating module configured to generate a target video for presenting the target text in the text input area.

According to one or more embodiments of the present disclosure, the displaying module is specifically configured to: in response to the first input instruction, generate the target text and obtaining a total number of characters of the target text; determine the first font state according to the total number of characters and an area size of the text input area; display the target text in the text input area based on the first font state.

According to one or more embodiments of the present disclosure, the area size comprises a lateral size of area and a longitudinal size of area; when determining the first font state according to the total number of characters and an area size of the text input area, the displaying module is specifically configured to: determine a number of characters in a single row according to a font width corresponding to a reference font size and the lateral size of area, the number of characters in a single row characterizing a number of characters that can be displayed in one row of the text input area; determine a first longitudinal size according to the number of characters in a single row and the total number of characters; determine the first font state according to the first longitudinal size and the longitudinal size of area.

According to one or more embodiments of the present disclosure, when determining the first font state according to the first longitudinal size and the longitudinal size of area, the displaying module is specifically configured to: obtain a ratio value of the first longitudinal size to the longitudinal size of area; in accordance with a determination that the ratio value is less than a first ratio threshold, determine the first font state based on the reference font size and/or a reference row spacing; in accordance with a determination that the ratio value is greater than the first ratio threshold, reduce the reference font size and/or reducing the reference row spacing based on the ratio value to derive the first font state.

According to one or more embodiments of the present disclosure, the generating module is specifically configured to: generate, based on the target text, a rendered image comprising the target text having the first font state; determine a video duration according to a length of the target text; generating the target video according to the video duration and the rendered image.

According to one or more embodiments of the present disclosure, before generating a target video for presenting the target text in the text input area, the displaying module is further configured to: in response to a second input instruction for the text editing page, display a background picture in the text editing page; and the generating module is specifically configured to generate the target video according to the target text in the text input area and the background picture.

According to one or more embodiments of the present disclosure, the target text further has a second font state characterizing a font color of the target text; when in response to a second input instruction for a text editing page, displaying a background picture in the text editing page, the displaying module is specifically configured to: in response to the second input instruction, match a target color based on the second font state, a color difference between the target color and the font color being greater than a color difference threshold; obtain a background picture with a main tone of the target color based on a predetermined picture library, and display the background picture in the text editing page.

According to one or more embodiments of the present disclosure, the generating module is further configured to: obtain a background music according to the background picture; generate a target video for presenting the target text in the text input area comprising: generate the target video according to the target text in the text input area and the background music.

According to a third aspect, an electronic device is provided according to one or more embodiments of the present disclosure, including: a processor, and a memory communicatively connected to the processor;
the memory storing computer-executable instructions;
the processor executes the computer executable instruction stored in the memory to implement the text video generation method according to the first aspect and various possible designs of the first aspect.

According to a fourth aspect, a computer-readable storage medium is provided according to one or more embodiments of the present disclosure, where the computer-readable storage medium stores computer-executable instructions, and when the processor executes the computer-executable instruction, the text video generation method according to the first aspect and various possible designs of the first aspect is implemented.

According to a fifth aspect, an embodiment of the present disclosure provides a computer program product, including a computer program, where the computer program, when executed by a processor, implements the text video generation method according to the first aspect and various possible designs of the first aspect.

The above description is only a preferred embodiment of the present disclosure and an explanation of the technical principles applied. Those skilled in the art should understand that the scope of disclosure involved in the present disclosure is not limited to the technical solution formed by a specific combination of the above technical features. At the same time, it should also cover other technical solutions formed by any combination of the above technical features or their equivalent features without departing from the above disclosure concept. For example, a technical solution formed by replacing the above features with technical features with similar functions disclosed in the present disclosure (but not limited to).

In addition, although various operations are depicted in a specific order, this should not be understood as requiring these operations to be performed in the specific order shown or in a sequential order. Under certain circumstances, multitasking and parallel processing may be advantageous. Similarly, although several specific implementation details are included in the above discussion, these should not be construed as limitations on the scope of the present disclosure. Certain features described in the context of separate embodiments can also be implemented in combination in a single embodiment. Conversely, various features described in the context of a single embodiment can also be implemented in multiple embodiments individually or in any suitable sub combination.

Although the subject matter has been described using language specific to structural features and/or methodological logical actions, it should be understood that the subject matter defined in the appended claims is not necessarily limited to the specific features or actions described above. On the contrary, the specific features and actions described above are only illustrative forms of implementing the claims.

## Claims

1. A method of generating a text video, **characterized by** comprising:
displaying a text editing page comprising a text input area;
in response to a first input instruction for the text editing page, displaying a target text in the text input area, wherein the target text has a first font state in the text input area, the first font state characterizes a font size and/or a row spacing of the target text, and the first font state is determined by a length of the target text;
generating a target video for presenting the target text in the text input area.

2. The method of claim 1, **characterized in that** in response to a first input instruction for the text editing page, displaying a target text in the text input area comprises:
in response to the first input instruction, generating the target text and obtaining a total number of characters of the target text;
determining the first font state according to the total number of characters and an area size of the text input area;
displaying the target text in the text input area based on the first font state.

3. The method of claim 2, **characterized in that** the area size comprises a lateral size of area and a longitudinal size of area; and determining the first font state according to the total number of characters and an area size of the text input area comprises:
determining a number of characters in a single row according to a font width corresponding to a reference font size and the lateral size of area, the number of characters in a single row characterizing a number of characters that can be displayed in one row of the text input area;
determining a first longitudinal size according to the number of characters in a single row and the total number of characters;
determining the first font state according to the first longitudinal size and the longitudinal size of area.

4. The method of claim 3, **characterized in that** determining the first font state according to the first longitudinal size and the longitudinal size of area comprises:
obtaining a ratio value of the first longitudinal size to the longitudinal size of area;
in accordance with a determination that the ratio value is less than a first ratio threshold, determining the first font state based on the reference font size and/or a reference row spacing;
in accordance with a determination that the ratio value is greater than the first ratio threshold, reducing the reference font size and/or reducing the reference row spacing based on the ratio value to derive the first font state.

5. The method of claim 1, **characterized in that** generating a target video for presenting the target text in the text input area comprises:
generating, based on the target text, a rendered image comprising the target text having the first font state;
determining a video duration according to a length of the target text;
generating the target video according to the video duration and the rendered image.

6. The method of claim 1, **characterized in that** before generating a target video for presenting the target text in the text input area, the method further comprises:
in response to a second input instruction for the text editing page, displaying a background picture in the text editing page;
generating a target video for presenting the target text in the text input area comprising:
generating the target video according to the target text in the text input area and the background picture.

7. The method of claim 6, **characterized in that** the target text further has a second font state characterizing a font color of the target text;
in response to a second input instruction for a text editing page, displaying a background picture in the text editing page comprising:
in response to the second input instruction, matching a target color based on the second font state, a color difference between the target color and the font color being greater than a color difference threshold;
obtaining a background picture with a main tone of the target color based on a predetermined picture library, and displaying the background picture in the text editing page.

8. The method of claim 6, **characterized in that** the method further comprises:
obtaining a background music according to the background picture;
generating a target video for presenting the target text in the text input area comprising:
generating the target video according to the target text in the text input area and the background music.

9. An apparatus for generating a text video, **characterized by** comprising:
an editing module configured to display a text editing page comprising a text input area;
a displaying module configured to in response to a first input instruction for the text editing page, display a target text in the text input area, wherein the target text has a first font state in the text input area, the first font state characterizes a font size and/or a row spacing of the target text, and the first font state is determined by a length of the target text;
a generating module configured to generate a target video for presenting the target text in the text input area.

10. An electronic device, **characterized by** comprising: a processor, and a memory communicatively connected to the processor;
the memory storing computer-executable instructions;
the processor executing the computer-executable instructions stored in the memory to implement the method of generating a text video of any of claims 1 to 8.

11. A computer-readable storage medium, **characterized in that** the computer-readable storage medium has computer-executable instructions stored thereon, the computer-executable instructions, when executed by a processor, implementing the method of generating a text video of any of claims 1 to 8.

12. A computer program product, **characterized by** comprising a computer program, the computer program, when executed by a processor, implementing the method of generating a text video of any of claims 1 to 8.
